Europäisches Patentamt

European Patent Office

Office européen des brevets

(19)

(11) Veröffentlichungsnummer: **0 286 722 B1**

# EUROPÄISCHE PATENTSCHRIFT

(12)

(45) Veröffentlichungstag der Patentschrift:
**11.04.90**

(21) Anmeldenummer: **87115561.0**

(22) Anmeldetag: **23.10.87**

(51) Int. Cl.⁴: **F15B 9/07**, F15B 5/00,
G05D 3/14, G05D 16/20

(54) **Elektropneumatischer Stellungsregler.**

(30) Priorität: **11.04.87 DE 3712337**

(43) Veröffentlichungstag der Anmeldung:
**19.10.88 Patentblatt 88/42**

(45) Bekanntmachung des Hinweises auf die Patenterteilung:
**11.04.90 Patentblatt 90/15**

(84) Benannte Vertragsstaaten:
**DE FR GB IT NL**

(56) Entgegenhaltungen:
**EP-A- 0 174 748**
**EP-A- 0 216 206**
**DE-A- 3 205 576**
**GB-A- 1 156 571**
**GB-A- 1 551 039**
**US-A- 3 290 997**

(73) Patentinhaber: **VDO Mess- und Regeltechnik GmbH,
Hackethalstrasse 7, D-3000 Hannover(DE)**

(72) Erfinder: **Riensche, Heinrich, Hus-Aren-Weg 6,
D-3062 Bückeburg(DE)**

(74) Vertreter: **Könekamp, Herbert, Dipl.-Ing. et al, Sodener
Strasse 9, D-6231 Schwalbach(DE)**

ACTORUM AG

**Beschreibung**

Die Erfindung betrifft einen elektropneumatischen Stellungsregler mit einem Strom-Druck-Umformer nach der Gattung des Hauptanspruchs.

Derartige elektropneumatische Stellungsregler sollen den Stellhub eines pneumatischen Stellgeräts, welches auch als Stellarmatur oder Stellmotor bezeichnet wird, proportional zu einem elektrischen Eingangssignal, d.h. einem Strom, aussteuern. Das Stellgerät kann beispielsweise dazu verwendet werden, gemäß dem Stellhub ein Ventil einzustellen, mit dem ein Druck, ein Durchfluß, eine Temperatur oder andere Größen geregelt werden können.

Ein solcher elektropneumatischer Stellungsregler ist aus der GB-A 1 551 039 bekannt. Dort wird das Stellungsrückmeldesignal jedoch nicht einer zweiten auf dem Weicheisenkern des Strom-Druck-Umformers angeordneten Spule zugeführt. Dies führt zu Bemessungsproblemen und insgesamt zu einer geringeren Empfindlichkeit des Stellungsreglers.

Außerdem ist die Zuführung elektrischer Hilfsenergie erforderlich.

Aus der DE-A 3 205 576 ist eine Vorrichtung zur Umformung von elektrischen in pneumatische Signale bekannt, bei der ein Permanentmagnet beweglich im Anziehungsbereich des Luftspaltes eines mit einer Spule versehenen Weicheisenkerns angeordnet ist. Solche pendelnd gelagerten Permanentmagnete sind gegen äußere Einflüsse durch Erschütterungen unempfindlich, weil ausgewogen.

Der vorliegenden Erfindung liegt daher die Aufgabe zugrunde, einen elektropneumatischen Stellungsregler der eingangs genannten Gattung so auszubilden, daß dieser in unkomplizierter Weise unempfindlich gegen Erschütterungen und Schwingungen des Stellgeräts angeordnet werden kann und einfach an den Hub des Stellgeräts angepaßt werden kann.

Diese Aufgabe wird durch die Ausbildung des elektropneumatischen Stellungsreglers der eingangs genannten Gattung mit den in dem kennzeichnenden Teil des Anspruchs 1 angegebenen Merkmalen gelöst.

In einem solchen Stromdruckumformer können die Spule und ihr Weicheisenkern ortsfest angeordnet werden. Als Permanentmagnet genügt ein relativ kleiner Magnet, der somit nur eine geringe bewegliche Masse aufweist und wenig träge arbeitet. Infolge der geringen Masse können durch diese kaum Störkräfte bei Anregungen von außen erzeugt werden. Mit verhältnismäßig geringem konstruktivem Aufwand läßt sich so eine große Robustheit erreichen. Darüber hinaus zeichnet sich dieser Stromdruckumformer durch eine sehr gute Linearität bei der Umformung des Stromes in Kraft aus.

In besonders vorteilhafter Weise benötigen der elektronische Verstärker und der elektrische Weggeber keine zusätzliche elektrische Hilfsenergie. Vielmehr wird die notwendige Spannungsversorgung von dem Eingangssignal abgeleitet, welches eine vorgegebene Spannung nicht unterschreiten soll. Die Stromversorgung wird von Zenerdioden in dem Eingangskreis der Spule des Stromdruckumformers abgegriffen, in den das Stellsignal eingespeist wird. Eine zweite Spule, die gegenüber der ersten Spule galvanisch isoliert ist, wird mit dem Ausgangsstrom des elektronischen Verstärkers entsprechend dem Rückmeldesignal gespeist. Der Strom des Stellsignals und der Ausgangsstrom des elektronischen Verstärkers entsprechend dem Rückmeldesignal sind somit galvanisch weitgehend vonenander entkoppelt. Der Ausgangsstrom des elektronischen Verstärkers erzeugt in dem Stromdruckumformer eine das Düsen-Prallplattensystem verstellende Kraft, die der durch das Eingangssignal bzw. den entsprechenden Strom hervorgerufenen Verstellung des Düsen-Prallplattensystems entgegenwirkt, so daß in dem Stromdruckumformer eine Kraftkompensation eintritt, obwohl diese Kraft nicht direkt von dem Hubausgang des Stellgeräts beispielsweise durch eine Feder erzeugt wird.

Zur Verarbeitung des in den Stromdruckumformer einzuspeisenden Rückmeldesignals, welches von dem elektrischen Weggeber erzeugt wird, ist zweckmäßig ein Verstärker nach Anspruch 2 mit Einstellelementen für den Proportionalbereich des Stellungsreglers sowie zur Anpassung an den Hub des Stellgeräts vorgesehen.

Im einzelnen sind diese Einstellelemente zweckmäßig nach Anspruch 3 ausgebildet und angeordnet. Die beiden Einstellelemente sind durch den elektronischen Verstärker bzw. die Verstärkerstufen voneinander entkoppelt, so daß sie sich nicht gegenseitig beeinflussen. Der elektronische Verstärker ermöglicht ferner eine gute Anspassung des elektrischen Weggebers an den Eingang bzw. die Spule des Stromdruckumformers.

Die Erfindung wird im folgenden anhand einer Zeichnung mit einer Figur erläutert. Wesentlicher Bestandteil des elektropneumatischen Stellungsreglers ist ein Stromdruckumformer mit einem Weicheisenkern 10, der durch zwei Spulen 11 und 12 geführt ist. Der Weicheisenkern 10 weist zwischen Polschuhen 13, 14 einen Luftspalt 15 auf. Unmittelbar vor dem Luftspalt ist ein Permanentmagnet 16 aus einem hochkoerzitiven Werkstoff an einem Waagebalken 17 angebracht und mit diesem schwenkbar. An dem entgegengesetzten Ende des Waagebalkens befindet sich im Abstand zu diesem eine Luftdüse 18, deren Auslaßöffnung einer nicht bezeichneten Prallplatte an diesem Ende des Waagebalkens gegenübersteht. Die Luftdüse wird über eine nicht dargestellte Drossel aus einer Zuluft-Leitung 19 gespeist. In einem pneumatischen Verstärker 20 kann mit der zu der Luftdüse 18 führenden Leitung 21 ein pneumatisches Verstärkerelement verbunden sein. Von dem Ausgang des Verstärkerelements führt eine Leitung 22 zu einem pneumatischen Stellgerät 23, um dieses mit einem Stelldruck $P_{st}$ zu beaufschlagen, der von der Stellung des Waagebalkens 17 bzw. der Prallplatte gegenüber der Luftdüse 18 abhängt.

Die Spule 11 des Stromdruckumformers wird über Klemmen 24, 25 mit einem Strom als Stellsignal beaufschlagt. Dabei liegt eine Mindestspannung an den Klemmen 24 und 25 an, aus der Betriebsspannungen eines elektronischen Verstärkers 5 sowie eines Potentiometers 31 für die Stellungsrückmeldung abgeleitet werden. Diese Betriebsspannungen werden über die Leitungen 28, 29 30 geführt.

Ein Schleifer des für die Stellungsrückmeldung an dem Stellgerät 23 angeordneten Potentiometers wird durch eine Spindel 32 des Stellgeräts entsprechend dessen Hub verstellt. Der Schleifer, der somit ein elektrisches Rückmeldesignal abgibt, steht mit einem Rückmeldesignaleingang 3 eines Gleichspannungsverstärkerelements 1 in dem elektronischen Verstärker 5 in Verbindung. Dieses Gleichspannungsverstärkerelement weist mit 4, 7 und 8 bezeichnete Anschlüsse für die Spannungsversorgung bzw. Vorspannungsversorgung auf, die entweder direkt mit den Leitungen 30, 28 oder über einen Vorwiderstand 33 mit der Leitung 30 verbunden sind. Ein Ausgang 6 des Gleichspannungsverstärkerelements ist über einen Koppelwiderstand 34 mit einer Basis eines Transistors 35 verbunden, dessen Kollektor mit dem Potentiometer 36 und der Spule 12 30 in Verbindung steht. Die mit dem verstärkten Rückmeldesignal gespeiste Spule 12 ist an den Kollektor des Transistors 35 angeschlossen. Das Potentiometer 36 dient zur Einstellung des Proportionalbereichs des Stellungsreglers. Der Emitter des Transistors 35 ist über einen einstellbaren Gegenkopplungswiderstand mit der anderen Leitung 28 der Spannungsversorgung verbunden. Außerdem ist der Emitter zu dem Gegenkopplungseingang 2 des Gleichspannungsverstärkerelements 1 gegengekoppelt. Der Gegenkopplungswiderstand 9 dient zur Anpassung des Stellungsreglers an den Hub des Stellgeräts 23. Je kleiner der Gegenkopplungswiderstand eingestellt ist, um so schwächer ist die Gegenkopplung, da das Emitterpotential des Transistors 35 immer stärker an dem Potential auf der Leitung 28 festgehalten wird.

Der elektropneumatische Stellungsregler arbeitet in der Weise, daß durch den Strom des Stellsignals, der durch die Spule 11 fließt, auf den Permanentmagneten 16 eine Kraft ausgeübt wird, welche die Tendenz hat, den Abstand zwischen dem Waagebalken 17 bzw. der Prallplatte zu der Luftdüse 18 zu verstellen, um den pneumatischen Verstärker 20 im Sinne des Stellsignals auf oder zu zu steuern. Dementsprechend nimmt der Stelldruck $P_{st}$ eine Größe an, welche in einen entsprechenden Hub an der Spindel 32 des Stellgeräts 23 umgesetzt wird. Zwischen dem Stellsignal an den Klemmen 24 und 25 und dem Hub der Spindel 32 besteht zunächst nicht unbedingt ein linearer Zusammenhang, auch wenn der Stromdruckumformer linear arbeitet, was beispielsweise durch die Kennlinie des Stellgeräts bedingt sein kann. Andererseits ist aber infolge der hohen Verstärkung des Stromdruckumformers bereits bei kleinen Änderungen des Stellsignals insoweit mit einer großen Änderung des Stelldrucks und damit des Hubs zu rechnen, solange die Stellungsrückmeldeeinrichtung nicht wirksam ist. Beispielsweise reicht 1 % des Gleichstromstellsignals aus, um den pneumatischen Verstärker 20 voll durchzusteuern.

Zur Herstellung des gewünschten Zusammenhangs zwischen dem Stellsignal und dem Hub wirkt die Stellungsrückmeldeeinrichtung wie folgt:

Das Potentiometer 31 erzeugt eine dem Hub proportionale Spannung, mit der das Gleichspannungsverstärkerelement 1 - Eingang 3 - beaufschlagt wird. Die über das Verstärkerelement 1 verstärkte Spannung treibt durch den Transistor 35 entsprechend der Einstellung des Gegenkopplungswiderstands 9 einen kompensierenden Ausgangsstrom durch die Spule 12. Die Größe des kompensierenden Ausgangsstroms hängt dabei von der Einstellung des Potentiometers 36 ab, so daß mit diesem der resultierende Proportionalbereich des gesamten Stellungsreglers beispielsweise zwischen 1 und 5 % eingestellt werden kann. Die Kompensation durch den Ausgangsstrom wirkt in der Weise, daß der durch den Ausgangsstrom in dem Weicheisenkern 10 und dem Luftspalt 15 hervorgerufene magnetische Fluß dem Fluß entgegenwirkt, der durch das Stellsignal in der Spule 11 erzeugt wurde. Dementsprechend wirkt auch die Kraft, die durch den Ausgangsstrom auf den Permanentmagneten ausgeübt wird, derjenigen entgegen, die die eingangs geschilderte Verstellung des Waagebalkens hervorgerufen hat. Im Ergebnis wird der Abstand zwischen der Luftdüse 18 und der Prallplatte bzw. dem Waagebalken 17 so eingestellt, daß der Hub der Spindel 32 dem Stellsignal an den Klemmen 24 und 25 bei dem eingestellten Proportionalbereich des Stellungsgebers streng proportional ist, ohne einen der Verstärker des Stellungsreglers zu übersteuern. Es wird jedoch bemerkt, daß anstatt der Proportionalität zwischen Stellsignal und Hub auch andere Kennlinienbeziehungen zwischen Stellsignal und Hub mit hoher Genauigkeit vorgegeben werden können, wenn die Stellungsrückmeldeeinrichtung mit dem elektrischen Weggeber, speziell dem Potentiometer 31, und dem elektronischen Verstärker 30 entsprechend abgewandelt werden.

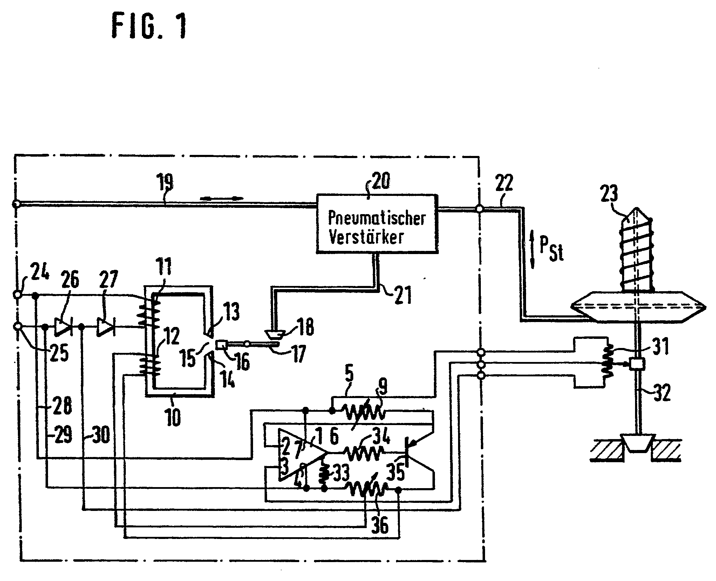

## Patentansprüche

1.Elektropneumatischer Stellungsregler mit einem Strom-Druck-Umformer, der als elektrischen Eingang mindestens eine mit einem Strom (Stellsignal) gespeiste Spule (11) sowie einen Permanentmagnete (16) aufweist, deren Relativlage in Abhängigkeit von dem Strom zur Einstellung einer Düsen-Prallplattenanordnung (17, 18) eines pneumatischen Systems variabel ist, für ein mit der Düsen-Prallplattenanordnung in Verbindung stehendes pneumatisches Stellgerät (23), welches einen Hubausgang (32) aufweist, sowie mit einer Stellungsrückmeldeeinrichtung (31) zwischen dem Wegausgang und dem Umformer, wobei als Stellungsrückmeldeeinrichtung ein elektrischer Weggeber (Potentiometer 31) mit dem Hubausgang (Spindel 32)des Stellgeräts (23) verbunden ist, dessen Rückmeldesignal zu dem elektrischen Eingang (Spulen 11, 12) des Strom-Druck-Umformers rückgeführt wird, dadurch gekennzeichnet, daß der Strom-Druck-Umformer mit einem ortsfesten, durch die Spule (11) geführten Weicheisenkern (10), der zwischen zwei Polschuhen (13, 14) über einen Luftspalt (15) geschlossen ist, sowie mit dem beweglich im Anziehungsbereich der beiden Polschuhe (13, 14) angeordneten Permanentmagneten (16) ausgebildet und der Weicheisenkern (10) des Strom-Druck-Umformers durch eine zweite Spule (12) geführt ist, die von der ersten Spule (11) galvanisch isoliert ist und von dem Ausgang des elektronischen Verstärkers (5) gespeist wird, und daß die Spannungsversorgung des elektronischen Verstärkers (5) und des Potentiometers (31) über Zenerdioden (26, 27) aus dem Strom (Stellsignal) erfolgt, der in die erste Spule (11) eingespeist wird.

2. Elektropneumatischer Stellungsregler nach Anspruch 1, dadurch gekennzeichnet, daß zwischen dem elektrischen Weggeber (Potentiometer 31) und dem elektrischen Eingang (Spule 12) des Strom-Druck-Umformers ein elektronischer Verstärker (5) angeordnet ist, der Einstellelemente (9, 36) für den Proportionalbereich des Stellungsreglers sowie zur Anpassung an den Hub des pneumatischen Stellgeräts (23) aufweist.

3. Elektropneumatischer Stellungsregler nach Anspruch 2, dadurch gekennzeichnet, daß zur Einstellung des Proportionalbereichs der Eingang (Spule 12) des Strom-Duck-Umformers über ein Potentiometer (36) am Verstärkerausgang angeschlossen ist und daß zur Anpassung an den Hub ein einstellbarer Gegenkopplungswiderstand (9) dient.

**Revendications**

1. Régulateur de position électro-pneumatique comportant un convertisseur de courant électrique, qui présente comme entrée électrique au moins une bobine (11) alimentée par un courant (signal de réglage) ainsi qu'un aimant permanent (16) dont la position relative est variable en fonction du courant pour assurer le réglage d'un dispositif (17, 18) plaque de déviation-buse d'un système pneumatique au profit d'un appareil (23) de réglage pneumatique qui est relié au dispositif plaque de déviation-buse, présente comme sortie une course (32), et est pourvu en outre d'un dispositif (31) de rétro-signalisation de position entre la sortie en forme de course et le convertisseur, un capteur électrique de position (potentiomètre 31) étant, en tant que dispositif de rétro-signalisation de position, relié à la sortie sous forme de course (tige 32) de l'appareil (23) de réglage, dont le rétro-signal est ramené à l'entrée électrique (bobines 11, 12) du convertisseur de courant-pression, régulateur caractérisé en ce que le convertisseur de courant-pression est constitué par un noyau (10) en fer doux fixe, guidé à travers la bobine (11), qui est fermé, entre deux pièces polaires (13, 14), par un entrefer (15) et par l'aimant permanent (16), disposé mobile dans la zone d'attraction des deux pièces polaires (13, 14), et en ce que le noyau de fer doux (10) du convertisseur de courant-pression est guidé à travers une deuxième bobine (12), qui est isolée galvaniquement de la première bobine (11) et est alimentée par la sortie de l'amplificateur électronique (5), et en ce que l'alimentation en tension de l'amplificateur électronique (5) et du potentiomètre (31) est effectuée par des diodes Zener (26, 27) à partir du courant (signal de réglage) alimentant la première bobine (11).

2. Régulateur de position électro-pneumatique selon la revendication 1, caractérisé en ce qu'entre le capteur électrique de déplacement (potentiomètre 31) et l'entrée électrique (bobine 12) du convertisseur de courantpression, est disposé un amplificateur (5) électronique, lequel présente des éléments (9, 36) de réglage pour le domaine proportionnel du régulateur de position, ainsi que pour l'adaptation à la course de l'appareil (23) de réglage pneumatique.

3. Régulateur de position électro-pneumatique selon la revendication 2, caractérisé en ce que l'entrée (bobine 12) du convertisseur de courant-pression est raccordée, au moyen d'un potentiomètre (36), à la sortie d'amplificateur pour le réglage du domaine proportionnel, et en ce qu'une résistance (9) de couplage de réaction réglable est utilisée pour l'adaptation à la course.

**Claims**

1. Electropneumatic position controller with a current-pressure converter, which has as an electrical input at least one coil (11) supplied with a current (positioning signal) and also a permanent magnet (16) whose relative position is variable in dependence on the current for adjusting a nozzle-and-baffle-plate arrangement (17, 18) of a pneumatic system, for a pneumatic positioning unit (23) which is connected with the nozzle-and-baffle-plate arrangement and which has a stroke output (32), also with a position feedback device (31) between the travel output and the converter, wherein as position feedback device an electrical travel signal transmitter (potentiometer 31) is connected to the stroke output (spindle 32) of the positioning unit (23), whose feedback signal is fed back to the electrical input (coils 11, 12) of the correntpressure converter, characterised in that the current-pressure converter is constructed with a stationary soft iron core (10) which extends through the coil (11) and which is closed between two pole pieces (13, 14) across an air gap (15), and also with the permanent magnet (16) which is arranged movably in the attraction region of the two pole pieces (13, 14), and the soft iron core (10) of the current-pressure converter extends through a second coil (12) which is electrically isolated from the first coil (11) and is supplied from the output of the electronic amplifier (5), and that the voltage supply of the electronic amplifier (5) and of the potentiometer (31) is effected via Zener diodes (26, 27) from the current (positioning signal) which is fed into the first coil (11).

2. Electropneumatic position controller according to claim 1, characterised in that between the electrical travel signal transmitter (potentiometer 31) and the electrical input (coil 12) of the currentpressure converter there is arranged an electronic amplifier (5) which has adjusting elements (9, 36) for the proportional rang of the position controller and also for adapting to the stroke of the pneumatic positioning unit (23).

3. Electropneumatic position controller according to claim 2, characterised in that for adjustment of the proportional range the input (coil 12) of the current-pressure converter is connected via a potentiometer (36) to the amplifier output, and that an adjustable negative-feedback resistor (9) is used for adapting to the stroke.

# FIG. 1